# EUROPÄISCHE PATENTSCHRIFT

(11) **EP 1 375 530 B1**
(45) Veröffentlichungstag und Bekanntmachung des Hinweises auf die Patenterteilung: **28.12.2005**
(21) Anmeldenummer: 03012202.2
(22) Anmeldetag: 05.06.2003
(51) Int. Cl.: C08F 6/00

(54) **Verfahren zur Verringerung der Geruchsemission in wässrigen Polymerdispersionen und in Polymerpulvern**
Method for the reduction of odour emissions of aqueous polymer dispersions and polymer powders
Procédé pour réduire les odeurs émises par des dispersions aqueuses de polymères et des poudres de polymères

(30) Priorität: 20.06.2002 DE 10227589
(43) Veröffentlichungstag der Anmeldung: 02.01.2004
(73) Patentinhaber: Wacker Polymer Systems GmbH & Co. KG, 84489 Burghausen (DE)
(72) Erfinder: Weiler, Peter, Dr., 82538 Geretsried (DE)
(74) Vertreter: Schuderer, Michael

(56) Entgegenhaltungen:
- EP-A- 1 065 225
- WO-A-03/002618
- DE-A- 19 728 997
- US-A- 4 127 382
- US-A- 4 659 793

## Beschreibung

Die Erfindung betrifft ein Verfahren zur Verringerung der Geruchsemission in wässrigen Polymerdispersionen und in Polymerpulvern.

Polymerdispersionen und Polymerpulver werden als Bindemittel im Bau-, Coating- oder Textilbereich eingesetzt. Ein Problem derartiger Dispersionen und Polymerpulver besteht darin, dass sie in der Regel noch flüchtige geruchsintensive Bestandteile wie z.B. Mercaptane, die als Molekulargewichtsregler bei der Polymerisation dienen, Ammoniak, der zur Neutralisation verwendet wird, Restmonomere, nicht-polymerisierbare Verunreinigungen der Monomere, flüchtige Reaktionsprodukte der Monomere, die unter den Reaktionsbedingungen gebildet werden, sowie flüchtige Abbauprodukte der Polymere enthalten. Der resultierende Geruch wird sowohl von den Herstellern, als auch von den Verbrauchern als unangenehm empfunden, weshalb ein Bedarf an desodorierten wässrigen Polymerdispersionen bzw. Polymerpulvern besteht.

Neben dem Eigengeruch der Kunststoffdispersionen kommen oft auch noch Geruchsemissionen, die während der Verarbeitung entstehen, hinzu. Ein Beispiel hierfür ist die Herstellung von Fasern. Fasern sind beim Verarbeiten einer hohen mechanischen Belastung ausgesetzt. Damit sie dieser hohen mechanischen Beanspruchung standhalten, werden sie mit Vorbehandlungsmitteln wie Schlichte, Textilhilfsmitteln für die Färberei und Druckerei, und Ausrüstungsmitteln behandelt. Typische Textilhilfsmittel sind Dispergiermittel (z. B. Naphthalinsulfonate, Fettalkoholethoxylate, Polyacrylate), Färbereinetzmittel, Färbebeschleuniger, Farbstoffe (z. B. Indigo, Schwefelfarbstoffe). Ausrüstungsmittel sind optische Aufheller, Mittel zur Verbesserung des Knitter- und Krumpfverhaltens, Antielektrostatika, Hydrophobierungsmittel, Flammschutzmittel. Alle diese Zusatzstoffe werden zusammen mit den Polymeren beim Pressvorgang einer hohen thermischen Belastung ausgesetzt. Stattfindende Zersetzungsreaktionen führen zu einer Vielzahl von chemischen Verbindungen, die für einen unangenehmen Geruch verantwortlich sind.

Bekanntlich werden Polymerisatdispersionen durch physikalische oder chemische Nachbehandlung desodoriert. Als physikalische Verfahren sind beispielsweise destillative Verfahren, insbesondere die Wasserdampfdestillation, sowie das Abstreifen mit inerten Gasen zu nennen, wie sie beispielsweise in der EP-A 327006 erwähnt sind. Nachteilig an diesem Verfahren ist, dass viele Dispersionen für diese Art der Desodorierung nicht hinreichend stabil sind, so dass Koagulatbildung auftritt, was eine aufwendige Filtration vor der weiteren Verwendung zur Folge hat. Ein weiterer Nachteil des Verfahrens ist, dass es zwar den Anteil an flüchtigen Stoffen in der wässrigen Polymerdispersion zu reduzieren vermag, jedoch die Frage der Entsorgung dieser Stoffe offen läßt.

Es ist auch bekannt, dass Polymerdispersionen durch chemische Nachbehandlung von geruchsintensiven Monomeren befreit werden können. Beispielsweise wird in der DE-A 4419518 beschrieben, dass durch radikalische Nachpolymerisation unter Einwirkung von Redoxinitiatorsystemen, chemisch die Absenkung der Restmonomere erfolgen kann. Die US-A 4529753 beschreibt ein Verfahren, womit der Gehalt an Restmonomeren von wässrigen Polymerisatdispersionen mittels nach Beendigung der Hauptpolymerisationsreaktion sich anschließender radikalischer Nachpolymerisation durch Einwirkung von besonderen radikalischen Redoxinitiatorsystemen reduziert werden kann. Solche Redoxinitiatorsysteme umfassen wenigstens ein Oxidationsmittel, wenigstens ein Reduktionsmittel sowie ein oder mehrere in verschiedenen Wertigkeitsstufen auftretende Übergangsmetallionen.

Nachteilig an den oben empfohlenen Verfahren ist jedoch, dass sie angewendet in geruchsintensiven Polymerdispersionen zwar teilweise den Restmonomergehalt senken können, allerdings den durch geruchsintensive Nebenprodukte, nicht-polymerisierbare Verunreinigungen der Monomere, flüchtige Reaktionsprodukte der Monomere, flüchtige Abbauprodukte der Polymere, bedingten unangenehmen Geruch nicht wirksam zu mindern vermögen. Auch die Geruchsemission, welche durch Hilfsstoffe bedingt ist, welche bei der Verarbeitung der Polymerdispersionen bzw. Polymerpulver eingesetzt werden, kann mit diesen Maßnahmen nicht wirksam verhindert werden.

Aus der US-A 4,906,462 ist eine geruchshemmende Zusammensetzung bekannt, welche eine Phosphorsäurekomponente, eine Kupferverbindung und gegebenenfalls ein Reduktionsmittel enthält. In der JP-A 62-204755 wird eine Kombination aus Kupfersulfat und Ascorbinsäure zur Desodorierung in Klimaanlagen eingesetzt. Die GB-A 2340505 beschreibt die Verwendung von Imidazolverbindungen zur Geruchsminimierung in Erdgas und Erdöl.

Es bestand daher die Aufgabe, ein Verfahren zur Verfügung zu stellen, mit dem die Geruchsemission von Polymerdispersionen und Polymerpulvern, insbesondere auch während deren Verarbeitung, wirksam vermindert werden kann.

Gegenstand der Erfindung ist ein Verfahren zur Verringerung der Geruchsemission in wässrigen Polymerdispersionen und in Polymerpulvern, wobei zu einer wässrigen Dispersion eines durch radikalische Polymerisation von einem oder mehrereren ethylenisch ungesättigten Monomeren zugänglichen Polymers nach Abschluß der Polymerisation
a) ein oder mehrere wasserlösliche Verbindungen aus der Gruppe umfassend Metallsalze von Kupfer-(II), Silber, Aluminium, Zink, Eisen-(III), sowie Kaliumpermanganat und Imidazolin sowie Imidazolinderivate, gegebenenfalls in Kombination mit
b) einem oder mehreren wasserlöslichen Reduktionsmittel aus der Gruppe umfassend Ascorbinsäure, Iso-Ascorbinsäure, Eisen-(II)-Salze, Zink- oder Alkaliformaldehydsulfoxylate zugegeben werden,
und gegebenenfalls die so behandelte wässrige Polymerdispersion zu einem Polymerpulver getrocknet wird, wobei wasserlöslich eine Löslichkeit in Wasser von ≥ 1 g/l bei Normalbedingungen (Normklima 23/50, DIN 50014) bedeutet.

Vorzugsweise wird die Komponente a), und gegebenenfalls die Komponente b), in einer Menge von 0.01 bis 15.0 Gew.-%, besonders bevorzugt 0.01 bis 10.0 Gew.-%, am meisten bevorzugt 0.01 bis 1.0 Gew.-%, jeweils bezogen auf das Polymer, zur Polymerdispersion zugegeben. Bevorzugt werden die beiden Komponenten a) und b) in Form deren wässrigen Lösungen zur Polymerdispersion gegeben.

Bevorzugt werden als Komponente a) Kupfer-II-sulfat, Silbersulfat, Aluminiumsulfat, Zinksulfat, Eisen-III-chlorid, Kaliumpermanganat, Imidazolin. Als Komponente b) wird Ascorbinsäure bevorzugt. Besonders bevorzugt werden als Komponente a) Kupfer-II-Sulfat, Zinksulfat, ein Gemisch aus Zinksulfat und Aluminiumsulfat, sowie jeweils die Kombinationen der genannten Salze mit Ascorbinsäure als Komponente b).

Als ethylenisch ungesättigte Monomere geeignet sind ein oder mehrere Monomere aus der Gruppe umfassend Vinylester von unverzweigten oder verzweigten Alkylcarbonsäuren mit 1 bis 18 C-Atomen, Acrylsäureester oder Methacrylsäureester von verzweigten oder unverzweigten Alkoholen oder Diolen mit 1 bis 18 C-Atomen, ethylenisch ungesättigte Mono- und Di-Carbonsäuren sowie deren Amide bzw. N-Methylolamide und Nitrile, ethylenisch ungesättigte Sulfonsäuren, ethylenisch ungesättigte heterocyclische Verbindungen, Diene, Olefine, Vinylaromaten und Vinylhalogenide.

Geeignete Vinylester sind solche von Carbonsäuren mit 1 bis 12 C-Atomen. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 13 C-Atomen, beispielsweise VeoVa9^{R} oder VeoVa10^{R} (Handelsnamen der Firma Shell). Besonders bevorzugt ist Vinylacetat.

Geeignete Monomeren aus der Gruppe Acrylsäureester oder Methacrylsäureester sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat. Besonders bevorzugt sind Methylacrylat, Methylmethacrylat, n-Butylacrylat, t-Butylacrylat und 2-Ethylhexylacrylat.

Beispiele für geeignete ethylenisch ungesättigte Mono- und Di-Carbonsäuren sowie deren Amide bzw. N-Methylolamide und Nitrile sind Acrylsäure, Methacrylsäure, Fumarsäure, Maleinsäure, Acrylamid, N-Methylolacrylamid, N-Methylolmethacrylamid und Acrylnitril. Beispiele für ethylenisch ungesättigte Sulfonsäuren sind Vinylsulfonsäure und 2-Acrylamido-2-methyl-propansulfonsäure. Geeignete ethylenisch ungesättigte heterocyclische Verbindungen sind Vinylpyrrolidon, Vinylpyridin.

Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien und Isopren.

Gegebenenfalls können noch 0.1 bis 50 Gew.-%, bezogen auf das Gesamtgewicht des Monomergemisches, Hilfsmonomere copolymerisiert werden. Bevorzugt werden 0.5 bis 15 Gew.-% Hilfsmonomere eingesetzt. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methylpropansulfonsäure. Weitere Beispiele sind vorvernetzende Comonomere, wie mehrfach ethylenisch ungesättigte Comonomere, beispielsweise Divinyladipat, Diallylmaleat, Diallylphthalat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere wie Acryloxypropyltri-(alkoxy)- und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Besonders bevorzugt werden Monomere oder Gemische, welche ein oder mehrere Monomere aus der Gruppe Vinylacetat, Vinylester von α-verzweigten Monocarbonsäuren mit 9 bis 13 C-Atomen, Vinylchlorid, Ethylen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol enthalten. Am meisten bevorzugt werden Gemische von Vinylacetat mit Ethylen; von Vinylacetat, Ethylen und einem Vinylester von α-verzweigten Monocarbonsäuren mit 9 bis 13 C-Atomen; von n-Butylacrylat mit 2-Ethylhexylacrylat und/oder Methylmethacrylat; von Styrol mit einem oder mehreren Monomeren aus der Gruppe Methylacrylat, Ethylacrylat, Propylacrylat, n-Butylacrylat, 2-Ethylhexylacrylat; von Vinylacetat mit einem oder mehreren Monomeren aus der Gruppe Methylacrylat, Ethylacrylat, Propylacrylat, n-Butylacrylat, 2-Ethylhexylacrylat und gegebenenfalls Ethylen; wobei die genannten Gemische gegebenenfalls noch ein oder mehrere der obengenannten Hilfsmonomere enthalten können.

Die Monomerauswahl bzw. die Auswahl der Gewichtsanteile der Comonomere erfolgt dabei so, dass im allgemeinen eine Glasübergangstemperatur Tg von -50°C bis +120°C, vorzugsweise - 30°C bis +95°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt:
1/Tg = x₁/Tg₁ + x₂/Tg₂ + ... + xₙ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die radikalisch initiierte Polymerisation der ethylenisch ungesättigten Monomeren kann grundsätzlich mit allen hierfür bekannten Polymerisationsverfahren erfolgen wie Massepolymerisation, Lösungspolymerisation, Fällungspolymerisation, Suspensionspolymerisation und Emulsionspolymerisation. Bevorzugt werden Lösungs-, Suspensions- und Emulsionspolymerisation.

Die Polymerisationstemperatur beträgt im allgemeinen 40°C bis 100°C, vorzugsweise 60°C bis 90°C. Bei der Copolymerisation von gasförmigen Comonomeren wie Ethylen, 1,3-Butadien oder Vinylchlorid kann auch unter Druck, im allgemeinen zwischen 5 bar und 100 bar, gearbeitet werden. Die Initiierung der Polymerisation kann mit den gebräuchlichen wasserlöslichen bzw. monomerlöslichen Initiatoren oder Redox-Initiator-Kombinationen erfolgen. Beispiele für wasserlösliche Initiatoren sind die Natrium-, Kalium- und Ammoniumsalze der Peroxodischwefelsäure, Wasserstoffperoxid, t-Butylperoxid, Kaliumperoxodiphosphat, t-Butylperoxopivalat, Cumolhydroperoxid, Isopropylbenzolmonohydroperoxid, Azobisisobutyronitril. Beispiele für monomerlösliche Initiatoren sind Dicetylperoxydicarbonat, Dicyclohexylperoxydicarbonat, Dibenzoylperoxid, tert.-Butylperoxyneodecanoat, tert.-Butyl-peroxy-2-ethylhexanoat und tert.-Butylperoxypivalat. Die genannten Initiatoren werden im allgemeinen in einer Menge von 0.01 bis 10.0 Gew.-%, bevorzugt 0.1 bis 0.5 Gew.-%, jeweils bezogen auf das Gesamtgewicht der Monomere, eingesetzt. Als Redox-Initiatoren verwendet man Kombinationen aus den genannten Initiatoren in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat und Ascorbinsäure. Die Reduktionsmittelmenge beträgt im allgemeinen 0.01 bis 10.0 Gew.-%, bevorzugt 0.1 bis 0.5 Gew.-%, jeweils bezogen auf das Gesamtgewicht der Monomere.

Bei den als bevorzugt genannten Verfahren der Suspensions- und Emulsionspolymerisation wird in Gegenwart von oberflächenaktiven Substanzen wie Schutzkolloiden und/oder Emulgatoren polymerisiert. Geeignete Schutzkolloide sind beispielsweise teilverseifte Polyvinylalkohole, Polyvinylpyrrolidone, Polyvinylacetale, Stärken, Cellulosen und deren Carboxymethyl-, Methyl-, Hydroxyethyl-, Hydroxypropyl-Derivate. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 60 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit bis zu 60 Ethylenoxid- bzw. Propylenoxid-Einheiten.

Die Monomere können insgesamt vorgelegt werden, insgesamt zudosiert werden oder in Anteilen vorgelegt werden und der Rest nach der Initiierung der Polymerisation zudosiert werden. Die Dosierungen können separat (räumlich und zeitlich) durchgeführt werden oder die zu dosierenden Komponenten können alle oder teilweise voremulgiert dosiert werden.

Nach Abschluß der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden. Die wässrigen Polymerdispersionen haben einen Feststoffgehalt von 30 bis 75 Gew.-%, vorzugsweise von 50 bis 60 Gew.-%.

Zur Herstellung der Polymerpulver werden die wässrigen Dispersionen, gegebenenfalls nach Zusatz von Schutzkolloiden als Verdüsungshilfe, getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 45°C bis 120°C, bevorzugt 60°C bis 90°C, je nach Anlage, Tg des Harzes und gewünschtem Trocknungsgrad, gewählt.

Bei der Trocknung zu in Wasser redispergierbaren Polymerpulvern wird in der Regel eine Verdüsungshilfe in einer Gesamtmenge von 3 bis 30 Gew.-%, bezogen auf die polymeren Bestandteile der Dispersion, eingesetzt. Das heißt die Gesamtmenge an Schutzkolloid vor dem Trocknungsvorgang soll mindestens 3 bis 30 Gew.-%, bezogen auf den Polymeranteil betragen; bevorzugt werden 5 bis 20 Gew.-% bezogen auf den Polymeranteil eingesetzt.

Geeignete Verdüsungshilfen sind teilverseifte Polyvinylalkohole; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)-acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden keine weiteren Schutzkolloide als Polyvinylalkohole als Verdüsungshilfe eingesetzt

Bei der Verdüsung hat sich vielfach ein Gehalt von bis zu 1.5 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Silicate mit Teilchengrößen vorzugsweise im Bereich von 10 nm bis 10 µm.

Die Viskosität der zu verdüsenden Speise wird über den Feststoffgehalt so eingestellt, dass ein Wert von < 500 mPas (Brookfield-Viskosität bei 20 Umdrehungen und 23°C), bevorzugt < 250 mPas, erhalten wird. Der Feststoffgehalt der zu verdüsenden Dispersion beträgt > 35 %, bevorzugt > 40 %.

Zur Verbesserung der anwendungstechnischen Eigenschaften können bei der Verdüsung weitere Zusätze zugegeben werden. Weitere, in bevorzugten Ausführungsformen enthaltene, Bestandteile von Dispersionspulverzusammensetzungen sind beispielsweise Pigmente, Füllstoffe, Schaumstabilisatoren, Hydrophobierungsmittel.

Die so behandelten Polymerdispersionen und Polymerpulver können in den dafür typischen Anwendungsbereichen eingesetzt werden. Beispielsweise in bauchemischen Produkten, gegebenenfalls in Verbindung mit hydraulisch abbindenden Bindemitteln wie Zementen (Portland-, Aluminat-, Trass-, Hütten-, Magnesia-, Phosphatzement), Gips, Wasserglas, für die Herstellung von Bauklebern, insbesondere Fliesenkleber und Vollwärmeschutzkleber, Putzen, Spachtelmassen, Fussbodenspachtelmassen, Verlaufsmassen, Dichtschlämmen, Fugenmörtel und Farben. Ferner als Bindemittel für Beschichtungsmittel und Klebemittel oder als Beschichtungs- und Bindemittel für Textilien, Fasern, Holz und Papier.

### Vergleichsbeispiel 1

### Herstellung eines polyvinylalkoholstabilisierten Emulsionspolymerisates

In einem Rührautoklaven mit ca. 16 1 Inhalt wurden 3.4 1 entionisiertes Wasser und 3.85 kg einer 20 Gew.-%igen wässrigen Lösung eines teilverseiften Polyvinylacetats mit einem Hydrolysegrad von 88 Mol%, einer Höpplerviskosität der 4 %-igen Lösung von 4 mPas (DIN 53015, Methode nach Höppler bei 20°C), vorgelegt. Der pH-Wert wurde mit 10 Gew.%-iger Ameisensäure auf 4.0 bis 4.2 eingestellt. Anschließend wurde evakuiert, mit Stickstoff gespült, erneut evakuiert und ein Gemisch aus 4.54 kg Styrol, 2.40 kg 1,3-Butadien und 64.8 g tert.-Dodecylmercaptan eingesaugt. Nach Aufheizen auf 80°C wurde die Polymerisation durch gleichzeitiges Einfahren von zwei Katalysatorlösungen gestartet, von denen die erste aus 197 g entionisiertem Wasser und 66 g einer 40 %-igen wässrigen tert.-Butylhydroperoxidlösung und die andere aus 508 g entionisiertem Wasser und 57 g Natriumformaldehydsulfoxylat bestand. Die Dosierung der Peroxidlösung erfolgte mit einer Zulaufgeschwindigkeit von 44 ml/h, die Natriumformaldehydsulfoxylat-Lösung wurde mit 94 ml/h zudosiert. 3.5 Stunden nach Polymerisationsbeginn waren die vorgelegten Monomere zu 90 % umgesetzt.
Nach weiteren 2 Stunden wurden die Initiatordosierungen gestoppt, der Reaktorinhalt auf 60°C abgekühlt und noch eine Stunde am Vakuum von restlichem Butadien befreit. Der Polymerisationsumsatz betrug > 99.5 Gew.-%.
Es wurde eine wässrige Polymerisatdispersion erhalten, deren Feststoffgehalt 52.6 Gew.-% betrug. Der bei der Polymerisation gebildete Koagulatanteil lag unter 0.5 Gew.-%, bezogen auf die Menge der zu polymerisierenden Monomeren. Die Glasübergangstemperatur der Verfilmung der wässrigen Polymerisatdispersion betrug 0°C.
400 Gew.-Teile der Dispersion wurden mit 200 Gew.-Teilen einer 10.3 Gew.-%igen Lösung eines Polyvinylalkohols (teilverseiftes Polyvinylacetat, Hydrolysegrad 88 Mol-%, Viskosität der 4 % igen Lösung 13 mPas), 0.84 Gew.-Teilen Entschäumer und 135 Gew.-Teilen Wasser versetzt und gründlich gemischt. Die Dispersion wurde durch eine Zweistoffdüse versprüht. Als Verdüsungskomponente diente auf 4 bar vorgepreßte Luft, die gebildeten Tropfen wurden mit auf 125°C erhitzter Luft im Gleichstrom getrocknet. Das erhaltene trockene Pulver wurde mit 10 % handelsüblichem Antiblockmittel (Gemisch aus Calcium-Magnesium-Carbonat und Magnesiumhydrosilikat) versetzt.

### Beispiel 2

Die Herstellung der Dispersion erfolgte analog Vergleichsbeispiel 1. Nach Polymerisationsende wurden 0.5 Gew.-Teile 10 Gew.-%-ige Kupfersulfatlösung dazugegeben und die Dispersion intensiv gerührt. Die Herstellung des Dispersionspulvers erfolgte analog Vergleichsbeispiel 1.

### Beispiel 3

Die Herstellung der Dispersion erfolgte analog Vergleichsbeispiel 1. Nach Polymerisationsende wurden 0.5 Gew.-Teil 10 Gew.-%-ige Kupfersulfatlösung dazugegeben und die Dispersion intensiv gerührt. Nach weiteren 10 Minuten wurden 0.55 Gew.-Teile 10 Gew.-%-ige Ascorbinsäurelösung langsam dazugegeben. Die Herstellung des Dispersionspulvers erfolgte analog Vergleichsbeispiel 1.

### Beispiel 4

Die Herstellung der Dispersion erfolgte analog Vergleichsbeispiel 1. Nach Polymerisationsende wurden 0.5 Gew.-Teile 10 Gew.-%-ige Zinksulfatlösung dazugegeben und die Dispersion intensiv gerührt. Die Herstellung des Dispersionspulvers erfolgte analog Vergleichsbeispiel 1.

### Beispiel 5

Die Herstellung der Dispersion erfolgte analog Vergleichsbeispiel 1. Nach Polymerisationsende wurden 0.1 Gew.-Teile Imidazolin (Unimid Z940, Arizona Chemical B. V.) dazugegeben und die Dispersion intensiv gerührt. Die Herstellung des Dispersionspulvers erfolgte analog Vergleichsbeispiel 1.

### Vergleichsbeispiel 6

### Herstellung eines emulgatorstabilisierten Emulsionspolymerisates mit Epoxidfunktionen

In einem 2 Liter Reaktor wurden 331.4 g deionisiertes Wasser, 29.0 g 20 %-ige Natrium-Dihexylsulfosuccinat-Lösung, 78.9 g Styrol und 29.0 g Butylacrylat vorgelegt und unter Rühren auf 80°C aufgeheizt. Bei 80°C wurden die Initiatordosierungen gestartet.

### Initiatordosierung 1: 40.5 g deionisiertes Wasser und 7.2 g Ascorbinsäure

### Initiatordosierung 2: 26.8 g deionisiertes Wasser und 9.0 g 40 %-ige tert.-Butylhydroperoxidlösung

Nach 40 Minuten wurde die Monomerdosierung eingefahren. Monomerdosierung: 229.0 g deionisiertes Wasser, 12.4 g n-Dodecylmercaptan, 484.4 g Styrol, 58.0 g Butylacrylat, 13.8 g 30 %-ige wässrige Acrylamidlösung, 16.6 g 50 %-ige wässrige 2-Acrylamido-2-methylpropansulfonsäure, 165.7 g Glycidylmethacrylat, 6.6 g Fettalkoholpolyglykolether mit 12 bis 14 C-Einheiten und 50 EO-Einheiten und 48.3 g 31 %-ige wässrige Lösung eines Dinatriumlaurylethersulfosuccinats mit 6 EO-Einheiten.

Der pH-Wert wurde während der Reaktion auf 5 bis 5.5 eingestellt. Nach Ende der vierstündigen Monomerdosierung ließ man die Initiatordosierungen 1 und 2 noch eine Stunde nachlaufen und stellte den pH-Wert mit 12.5 %-iger Ammoniaklösung auf 7.5 ein.

Der Festgehalt war 52.6 %, die Viskosität 47mPas und der K-Wert 24.

Ein rieselfähiges Pulver mit einer Korngröße von ca. 30 µm (Volumenmittel) erhielt man durch Sprühtrocknung.

### Beispiel 7

Die Herstellung der Dispersion erfolgte analog Vergleichsbeispiel 6. Nach Polymerisationsende wurden 0.5 Gew.-Teile 10 Gew.-%-ige Kupfersulfatlösung dazugegeben und die Dispersion intensiv gerührt. Die Herstellung des Dispersionspulvers erfolgte analog Vergleichsbeispiel 6.

### Beispiel 8

Die Herstellung der Dispersion erfolgte analog Vergleichsbeispiel 6. Nach Polymerisationsende wurden 0.5 Gew.-Teil 10 Gew.-%-ige Kupfersulfatlösung dazugegeben und die Dispersion intensiv gerührt. Nach weiteren 10 Minuten wurden 0.55 Gew.-Teile 10 Gew.-%-ige Ascorbinsäurelösung langsam dazugegeben. Die Herstellung des Dispersionspulvers erfolgte analog Vergleichsbeispiel 6.

### Beispiel 9

Die Herstellung der Dispersion erfolgte analog Vergleichsbeispiel 6. Nach Polymerisationsende wurden 0.5 Gew.-Teile 10 Gew.-%-ige Zinksulfatlösung dazugegeben und die Dispersion intensiv gerührt. Die Herstellung des Dispersionspulvers erfolgte analog Vergleichsbeispiel 6.

### Beispiel 10

Die Herstellung der Dispersion erfolgte analog Vergleichsbeispiel 6. Nach Polymerisationsende wurden 0.1 Gew.-Teile Imidazolin (Unimid Z940, Arizona Chemical B. V.) dazugegeben und die Dispersion intensiv gerührt. Die Herstellung des Dispersionspulvers erfolgte analog Vergleichsbeispiel 6.

### Vergleichsbeispiel 11

### Herstellung eines emulgatorstabilisierten Emulsionspolymerisates mit Säurefunktionen

In einem 2 Liter Reaktor wurden 330.2 g deionisiertes Wasser, 33.0 g 20 %-ige Natrium-Dihexylsulfosuccinat-Lösung, 78.6 g Styrol und 28.9 g Butylacrylat vorgelegt und unter Rühren auf 80°C aufgeheizt. Bei 80°C wurden die Initiatordosierungen gestartet.

### Initiatordosierung 1: 33.6 g deionisiertes Wasser und 5.9 g Ascorbinsäure

### Initiatordosierung 2: 22.3 g deionisiertes Wasser und 7.4 g 40 %-ige tert.-Butylhydroperoxidlösung

Nach 40 Minuten wurde die Monomerdosierung eingefahren. Monomerdosierung: 222.6 g deionisiertes Wasser, 12.4 g n-Dodecylmercaptan, 400.2 g Styrol, 206.4 g Butylacrylat, 13.8 g 30 %-ige wässrige Acrylamidlösung, 16.5 g 50%-ige wässrige 2-Acrylamido-2-methylpropansulfonsäure, 12.4 g Acrylsäure, 86.7 g Methacrylsäure, 8.3 g Fettalkoholpolyglykolether mit 12 bis 14 C-Einheiten und 50 EO-Einheiten und 55.0 g 31 %-ige wässrige Lösung eines Dinatriumlaurylethersulfosuccinats mit 6 EO-Einheiten.

Der pH-Wert wurde während der Reaktion auf 4 eingestellt. Nach Ende der vierstündigen Monomerdosierung ließ man die Initiatordosierungen 1 und 2 noch eine Stunde nachlaufen und stellte den pH-Wert mit 12.5 %-iger Ammoniaklösung auf 7.5 ein.

Der Festgehalt war 52.9 %, die Viskosität 133 mPas und der K-Wert 25.

Ein rieselfähiges Pulver mit einer Korngröße von ca. 30 µm (Volumenmittel) erhielt man durch Sprühtrocknung.

### Beispiel 12

Die Herstellung der Dispersion erfolgte analog vergleichsbeispiel 11. Nach Polymerisationsende wurden 0.5 Gew.-Teile 10 Gew.-%-ige Kupfersulfatlösung dazugegeben und die Dispersion intensiv gerührt. Die Herstellung des Dispersionspulvers erfolgte analog Vergleichsbeispiel 11.

### Beispiel 13

Die Herstellung der Dispersion erfolgte analog Vergleichsbeispiel 11. Nach Polymerisationsende wurden 0.5 Gew.-Teil 10 Gew.-%-ige Kupfersulfatlösung dazugegeben und die Dispersion intensiv gerührt. Nach weiteren 10 Minuten wurden 0.55 Gew.-Teile 10 Gew.-%-ige Ascorbinsäurelösung langsam dazugegeben. Die Herstellung des Dispersionspulvers erfolgte analog Vergleichsbeispiel 11.

### Beispiel 14

Die Herstellung der Dispersion erfolgte analog Vergleichsbeispiel 11. Nach Polymerisationsende wurden 0.5 Gew.-Teile 10 Gew.-%-ige Zinksulfatlösung dazugegeben und die Dispersion intensiv gerührt. Die Herstellung des Dispersionspulvers erfolgte analog Vergleichsbeispiel 11.

### Beispiel 15

Die Herstellung der Dispersion erfolgte analog Vergleichsbeispiel 11. Nach Polymerisationsende wurden 0.1 Gew.-Teile Imidazolin (Unimid Z940, Arizona Chemical B. V.) dazugegeben und die Dispersion intensiv gerührt. Die Herstellung des Dispersionspulvers erfolgte analog Vergleichsbeispiel 11.

### Beispiel 16

In einem 400 Liter Reaktor wurden 15.0 kg deionisiertes Wasser, 82.6 kg einer 9.0 %-igen wässrigen Lösung eines teilverseiften Polyvinylalkohols mit einem Hydrolysegrad von 94 Mol-%, 28.5 kg Vinylacetat und 28.5 g Crotonaldehyd vorgelegt und unter Rühren aufgeheizt. Bei 57°C wurden die Initiatordosierungen mit einer Dosierrate von 1 kg/h gestartet. Initiatordosierung 1: 5.1 kg deionisiertes Wasser und 273.3 g 40 %-ige tert.-Butylhydroperoxidlösung

### Initiatordosierung 2: 5.3 kg deionisiertes Wasser, 177.6 g Natriumhydrogencarbonat und 177.6 g Natriumformaldehydsulfoxylat

Nach der Auspolymerisation der Vorlage wurden die Initiatorraten auf 0.5 kg/h reduziert und die Monomerdosierungen 1 und 2 eingefahren.

### Monomerdosierung 1

189.8 g Divinyladipat, 19.4 kg VeoVa 10 (Vinylester von α-verzweigten Monocarbonsäuren mit 10 C-Atomen) und 66.0 kg Vinylacetat

### Monomerdosierung 2

11.4 kg deionisiertes Wasser, 1.8 kg einer 25 %-igen wässrigen Lösung eines Nonylphenolethoxylats mit 23 EO-Einheiten und 9.5 kg N-Methylolacrylamid

Die Monomermischungen 1 und 2 wurden in 90 Minuten zudosiert. Nach Dosierende wurden die Initiatordosierungen auf 300 g/h reduziert und die Innentemperatur wurde auf 63°C hochgestellt. Während der Hauptreaktion sollte die Innentemperatur 72°C nicht übersteigen. Nach Ende der Reaktion wurden die Initiatordosierungen wieder auf 1 kg/h erhöht und man ließ beide Dosierungen noch eine Stunde nachlaufen.

Der Festgehalt war 49.8 % und die Viskosität 40.000 mPas.

Zum Verdüsen wurde die Dispersion auf einen Festgehalt von 25 % mit Wasser verdünnt und mit jeweils 1 Gew.-%, 3 Gew.-%, 5 Gew.-% und 10 Gew.-% einer Aluminiumsulfat/Zinksulfat-Mischung (Gewichtsverhältnis 1 : 3) versetzt. Durch Sprühtrocknung erhielt man ein rieselfähiges Pulver mit einer Korngröße von ca. 30 µm (Volumenmittel).

### Geruchsprüfung:

Beurteilung des Geruchs an den Dispersionsfilmen und den Dispersionsfilmen von Redispersionen der Dispersionspulver.

Zur Herstellung der Filme wurde durch Redispergieren der Dispersionspulver in Wasser eine 30 Gew.-%-ige Dispersion erzeugt.

Die Dispersionen wurden zur Erzeugung von Filmen auf eine Silikonkautschukplatte gegossen und anschließend 24 Stunden bei 23°C getrocknet. Die so erhaltenen Filme von Format 15 cm x 10 cm wurden in eine auf 75°C vorgeheizte 250ml-Weithalsglasflasche mit Schraubdeckel gefüllt und 5 Minuten in einen auf 75°C geheizten Trockenschrank gestellt. Die Filme der emulgatorstabilisierten Dispersionen (Beispiel 6 bis 15) waren sehr spröde. Sie wurden deshalb in Bruchstücken in die Weithalsflaschen überführt.

Anschließend ließ man auf Raumtemperatur abkühlen und den Geruch von vier Testpersonen anhand einer Notenskala von 1 bis 6 (Geruchsintensität) beurteilen:

Note 1 = Geruch nicht wahrnehmbar; Note 2 = Geruch wahrnehmbar, aber nicht störend; Note 3 = Geruch deutlich wahrnehmbar, aber noch nicht störend; Note 4 = Geruch störend; Note 5 = Geruch stark störend; Note 6 = Geruch unerträglich.

Die Ergebnisse der Geruchsprüfung sind in Tabelle 1 bis 3 wiedergegeben (D = Dispersion; P = Pulver).

**Tabelle 1:**

| Ergebnisse der Geruchsprüfung | | | | | | | |
|---|---|---|---|---|---|---|---|
| Beispiel | V1 (D) | V1 (P) | 2 (D) | 3 (D) | 3 (P) | 4 (D) | 5 (D) |
| Testperson 1 | 4 | 4 | 3 | 2 | 2 | 2 | 1 |
| Testperson 2 | 4 | 5 | 3 | 1 | 1 | 3 | 2 |
| Testperson 3 | 5 | 5 | 3 | 2 | 2 | 3 | 1 |
| Testperson 4 | 6 | 5 | 4 | 1 | 2 | 2 | 2 |

**Tabelle 2:**

| Ergebnisse der Geruchsprüfung | | | | | | | |
|---|---|---|---|---|---|---|---|
| Beispiel | V6 (D) | V6 (P) | 7 (D) | 8 (D) | 8 (P) | 9 (D) | 10 (D) |
| Testperson 1 | 4 | 6 | 3 | 1 | 1 | 2 | 1 |
| Testperson 2 | 6 | 5 | 3 | 1 | 1 | 3 | 2 |
| Testperson 3 | 5 | 5 | 2 | 2 | 1 | 3 | 1 |
| Testperson 4 | 5 | 6 | 3 | 2 | 2 | 2 | 2 |

**Tabelle 3:**

| Ergebnisse der Geruchsprüfung | | | | | | | |
|---|---|---|---|---|---|---|---|
| Beispiel | V11 (D) | V11 (P) | 12 (D) | 13 (D) | 13 (P) | 14 (D) | 15 (D) |
| Testperson 1 | 5 | 5 | 3 | 1 | 2 | 2 | 1 |
| Testperson 2 | 4 | 5 | 4 | 1 | 1 | 3 | 1 |
| Testperson 3 | 5 | 6 | 3 | 2 | 1 | 3 | 2 |
| Testperson 4 | 6 | 5 | 4 | 1 | 2 | 2 | 1 |

Die Testergebnisse zeigen, dass sowohl Polymerdispersionen als auch Polymerpulver mit dem beanspruchten Verfahren wirksam desodoriert werden können.

### Herstellung der Faserformkörper zur Geruchsprüfung:

Zur Herstellung von Pressplatten wurden 115 g Reissbaumwolle mit 13.2 g Bindepulver aus Beispiel 16 vermischt und auf einer Fläche von 24 cm x 24 cm ausgebreitet. Die Faser/Pulvermischungen wurden sofort anschliessend bei Temperaturen von ca. 180°C 5 min lang verpresst, so dass hart verpresste Platten mit 2 mm Dicke bzw. weiche 10 mm dicke Platten mit einem Flächengewicht von ca. 2200 g/m² und einem Raumgewicht von ca. 1115 kg/m³ bzw. 223 kg/m³ erhalten wurden.

### Geruchsprüfung der Faserformkörper:

Aus den Faserformkörpern wurden jeweils Probekörper mit einem Volumen von 50 cm³ ausgeschnitten und diese in ein 11-Probegefäß überführt. Anschließend wurden die Probekörper 24 Stunden bei 23°C (C1), 24 Stunden bei 40°C (C2) oder 2 Stunden bei 80°C (C3) gelagert.

Anschließend ließ man auf Raumtemperatur abkühlen und den Geruch von vier Testpersonen anhand der oben beschriebenen Notenskala von 1 bis 6 (Noten sind Mittelwerte) beurteilen:

**Tabelle 4:**

| Ergebnisse der Geruchsprüfung | | | | | | | |
|---|---|---|---|---|---|---|---|
| Beispiel | Zusatz | 2 mm Pressplatten | | | 10 mm Pressplatten | | |
| | | C1 | C2 | C3 | C1 | C2 | C3 |
| 16 | + 0% AI/Zn-sulfat | 3,5 | 4,5 | 3,0 | 4,0 | 4,0 | 4,0 |
| 16 | + 1% Al/Zn-sulfat | 3,0 | 4,0 | 4,0 | 3,0 | 3,5 | 4,0 |
| 16 | + 3% Al/Zn-sulfat | 2,5 | 4,0 | 3,0 | 2,0 | 3,5 | 3,5 |
| 16 | + 5% Al/Zn-sulfat | 2,0 | 4,0 | 2,0 | 2,0 | 3,0 | 3,0 |
| 16 | + 10% Al/Zn-sulfat | 3,0 | 4,0 | 3,0 | 2,0 | 4,0 | 3,0 |

Die Ergebnisse zeigen, dass mit dem vorliegenden Verfahren Produkte erhalten werden, welche bei deren Verarbeitung zu geringerer Geruchsemission führen.

## Patentansprüche

1. Verfahren zur Verringerung der Geruchsemission in wässrigen Polymerdispersionen und in Polymerpulvern, wobei zu einer wässrigen Dispersion eines durch radikalische Polymerisation von einem oder mehrereren ethylenisch ungesättigten Monomeren zugänglichen Polymers nach Abschluß der Polymerisation
a) eine oder mehrere wasserlösliche Verbindungen aus der Gruppe umfassend Metallsalze von Kupfer-(II), Silber, Aluminium, Zink, Eisen-(III), sowie Kaliumpermanganat und Imidazolin sowie Imidazolinderivate, in Kombination mit
b) einem oder mehreren wasserlöslichen Reduktionsmittel aus der Gruppe umfassend Ascorbinsäure, Iso-Ascorbinsäure, Eisen-(II)-Salze, Zink- oder Alkaliformaldehydsulfoxylate zugegeben werden,
und gegebenenfalls die so behandelte wässrige Polymerdispersion zu einem Polymerpulver getrocknet wird, wobei wasserlöslich eine Löslichkeit in Wasser von ≥ 1 g/l bei Normalbedingungen (Normklima 23/50, DIN 50014) bedeutet.

2. Verfahren nach Anspruch 1, **dadurch gekennzeichnet, dass**
a) ein oder mehrere Verbindungen aus der Gruppe umfassend Kupfer-II-sulfat, Silbersulfat, Aluminiumsulfat, Zinksulfat, Eisen-III-chlorid, Kaliumpermanganat sowie Imidazolin, in Kombination mit
b) einem Reduktionsmittel aus der Gruppe umfassend Ascorbinsäure und Iso-Ascorbinsäure zugegeben werden.

3. Verfahren nach Anspruch 1 oder 2, **dadurch gekennzeichnet, dass** als Komponente a) Kupfer-II-Sulfat, Zinksulfat, ein Gemisch aus Zinksulfat und Aluminiumsulfat, jeweils in Kombination mit Ascorbinsäure als Komponente b) zugegeben werden.

4. Verfahren nach Anspruch 1 bis 3, **dadurch gekennzeichnet, dass** die Komponente a), und die Komponente b), in einer Menge von 0.01 bis 15.0 Gew.-%, bezogen auf das Polymer, zur Polymerdispersion zugegeben werden.

5. Verfahren nach Anspruch 1 bis 4, **dadurch gekennzeichnet, dass** als ethylenisch ungesättigte Monomere ein oder mehrere Monomere eingesetzt werden, aus der Gruppe umfassend Vinylester von unverzweigten oder verzweigten Alkylcarbonsäuren mit 1 bis 18 C-Atomen, Acrylsäureester oder Methacrylsäureester von verzweigten oder unverzweigten Alkoholen oder Diolen mit 1 bis 18 C-Atomen, ethylenisch ungesättigte Mono- und Di-Carbonsäuren sowie deren Amide und N-Methylolamide und Nitrile, ethylenisch ungesättigte Sulfonsäuren, ethylenisch ungesättigte heterocyclische Verbindungen, Diene, Olefine, Vinylaromaten und Vinylhalogenide.

6. Verfahren nach Anspruch 1 bis 5, **dadurch gekennzeichnet, dass** die Polymerisation mit dem Lösungs-, Suspensions- oder Emulsionspolymerisationsverfahren erfolgt.

7. Verfahren nach Anspruch 1 bis 6, **dadurch gekennzeichnet, dass** die Polymerdispersionen mittels Sprühtrocknung getrocknet werden.

8. Verwendung der Verfahrensprodukte nach einem der Ansprüche 1 bis 7 in bauchemischen Produkten.

9. Verwendung der Verfahrensprodukte nach einem der Ansprüche 1 bis 7 als Bindemittel für Beschichtungsmittel und Klebemittel.

10. Verwendung der Verfahrensprodukte nach einem der Ansprüche 1 bis 7 als Beschichtungs- und Bindemittel für Textilien, Fasern, Holz und Papier.

## Claims

1. Process for reducing odour emission in aqueous polymer dispersions and in polymer powders, which comprises admixing an aqueous dispersion of a polymer obtainable by free-radical polymerization of one or more ethylenically unsaturated monomers, after conclusion of the polymerization, with
a) one or more water-soluble compounds selected from the group consisting of metal salts of copper(II), silver, aluminium, zinc and iron(III) and also potassium permanganate and imidazoline and also imidazoline derivatives, in combination with
b) one or more water-soluble reducing agents selected from the group consisting of ascorbic acid, isoascorbic acid, iron(II) salts, zinc formaldehydesulphoxylate and alkali metal formaldehydesulphoxylate,
and optionally drying the thus treated aqueous polymer dispersion to form a polymer powder, water-soluble denoting a solubility of ≥ 1 g/l in water under standard conditions (23/50 standard atmosphere, DIN 50014).

2. Process according to Claim 1, **characterized in that** there are admixed
a) one or more compounds selected from the group consisting of copper(II) sulphate, silver sulphate, aluminium sulphate, zinc sulphate, iron(III) chloride, potassium permanganate and also imidazoline, in combination with
b) a reducing agent selected from the group consisting of ascorbic acid and isoascorbic acid.

3. Process according to Claim 1 or 2, **characterized in that** there are admixed as component a) copper(II) sulphate, zinc sulphate, a mixture of zinc sulphate and aluminium sulphate, in each case combined with ascorbic acid as component b).

4. Process according to Claim 1 to 3, **characterized in that** the component a) and the component b) are added in an amount of 0.01% to 15.0% by weight, based on the polymer, to the polymer dispersion.

5. Process according to Claim 1 to 4, **characterized in that** the ethylenically unsaturated monomers used comprise one or more monomers selected from the group consisting of vinyl esters of branched or unbranched alkylcarboxylic acids having 1 to 18 carbon atoms, acrylic esters or methacrylic esters of branched or unbranched alcohols or diols having 1 to 18 carbon atoms, ethylenically unsaturated mono- and dicarboxylic acids and also their amides and N-methylolamides and nitriles, ethylenically unsaturated sulphonic acids, ethylenically unsaturated heterocyclic compounds, dienes, olefins, styrenics and vinyl halides.

6. Process according to Claim 1 to 5, **characterized in that** the polymerization is effected using the solution, suspension or emulsion polymerization process.

7. Process according to Claim 1 to 6, **characterized in that** the polymer dispersions are dried by spray drying.

8. Use of the process products of any of Claims 1 to 7 in construction-chemical products.

9. Use of the process products of any of Claims 1 to 7 as binders for coatings and adhesives.

10. Use of the process products of any of Claims 1 to 7 as coating and bonding agents for textiles, fibres, wood and paper.

## Revendications

1. Procédé pour réduire les odeurs émises par des dispersions aqueuses de polymères et des poudres de polymères, où on ajoute, à une dispersion aqueuse d'un polymère pouvant être obtenue par polymérisation radicalaire d'un ou de plusieurs monomères éthyléniquement insaturés, après achèvement de la polymérisation,
(a) un ou plusieurs composés hydrosolubles parmi le groupe comprenant des sels métalliques de cuivre(II), d'argent, d'aluminium, de zinc, de fer (III), ainsi que le permanganate de potassium et l'imidazolyne et des dérivés d'imidazolyne, en combinaison avec
(b) un ou plusieurs réducteurs hydrosolubles parmi le groupe comprenant l'acide ascorbique, l'acide iso-ascorbique, des sels de fer(II) des formaldéhydesulfoxylates de zinc ou de métaux alcalins,
et la dispersion aqueuse de polymère ainsi traitée est éventuellement séchée pour donner lieu à une poudre de polymère, hydrosoluble signifiant une solubilité dans l'eau ≥ 1 g/l dans des conditions normales (atmosphère normale 23/50, DIN 50014).

2. Procédé selon la revendication 1, **caractérisé en ce que** l'on ajoute
a) un ou plusieurs composés parmi le groupe comprenant le sulfate de cuivre(II), le sulfate d'argent, le sulfate d'aluminium, le sulfate de zinc, le chlorure de fer(III), le permanganate de potassium ainsi que l'imidazolyne, en combinaison avec
b) un réducteur parmi le groupe comprenant l'acide ascorbique et l'acide iso-ascorbique.

3. Procédé selon la revendication 1 ou 2, **caractérisé en ce que** l'on ajoute, en tant que composant a), du sulfate de cuivre (II), du sulfate de zinc, un mélange de sulfate de zinc et de sulfate d'aluminium, dans chaque cas en combinaison avec de l'acide ascorbique en tant que composant b).

4. Procédé selon les revendications 1 à 3, **caractérisé en ce que** le composant a) et le composant b) sont ajoutés en une quantité de 0,01 à 15, 0% en poids, par rapport au polymère, à la dispersion de polymère.

5. Procédé selon les revendications 1 à 4, **caractérisé en ce que** l'on utilise en tant que monomères éthyléniquement insaturés, un ou plusieurs monomères parmi le groupe comprenant des esters vinyliques d'acides alkylcarboxyliques non ramifiés ou ramifiés ayant de 1 à 18 atomes de carbone, des esters acryliques ou des esters méthacryliques d'alcools ou de diols ramifiés ou non ramifiés ayant de 1 à 18 atomes de carbone, des acides mono- et dicarboxyliques éthyléniquement insaturés ainsi que leurs amides et N-méthylolamides et nitriles, des acides sulfoniques éthyléniquement insaturés, des composés hétérocycliques éthyléniquement insaturés, des diènes, des oléfines, des composés vinylaromatiques et des halogénures de vinyle.

6. Procédé selon les revendications 1 à 5, **caractérisé en ce que** la polymérisation est réalisée à l'aide du procédé de polymérisation en solution, en suspension ou en élution.

7. Procédé selon les revendications 1 à 6, **caractérisé en ce que** les dispersions de polymères sont séchées au moyen du séchage par pulvérisation.

8. Utilisation des produits du procédé selon l'une quelconque des revendications 1 à 7 dans des produits chimiques de construction.

9. Utilisation des produits du procédé selon l'une quelconque des revendications 1 à 7 en tant que liants pour des compositions de revêtement et des adhésifs.

10. Utilisation des produits du procédé selon l'une quelconque des revendications 1 à 7 en tant que compositions de revêtement et liants pour des textiles, des fibres, le bois et le papier.
